# EUROPÄISCHE PATENTSCHRIFT

(11) **EP 0 582 093 B1**
(45) Veröffentlichungstag und Bekanntmachung des Hinweises auf die Patenterteilung: **28.05.1997**
(21) Anmeldenummer: 93110670.2
(22) Anmeldetag: 05.07.1993
(51) Int. Cl.: B65H 5/10, B21D 43/24, B65G 59/04, B21D 37/18

(54) **Platinenzuführeinrichtung für eine Presse**
Blank feeding device for a press
Dispositif pour alimenter des flans pour une presse

(30) Priorität: 31.07.1992 DE 4225248
(43) Veröffentlichungstag der Anmeldung: 09.02.1994
(73) Patentinhaber: Umformtechnik ERFURT GmbH, D-99086 Erfurt (DE)
(72) Erfinder: Darr, Uwe, D-99094 Erfurt (DE); Miethbauer, Klaus, D-99091 Erfurt (DE); Urinski, Frank, D-99097 Erfurt (DE)

(56) Entgegenhaltungen:
- EP-A- 0 210 923
- EP-A- 0 487 848
- DD-A- 258 123
- DE-A- 2 131 238
- DE-A- 2 438 960
- DE-A- 2 439 032
- DE-A- 2 534 819
- FR-A- 1 408 335
- FR-A- 2 425 396
- FR-A- 2 532 919
- FR-A- 2 609 428
- MACHINES PRODUCTION Nr. 483 , 17. März 1988 , BOULOGNE/SEINE FR Seiten 88 - 90 NN.

## Beschreibung

Die Erfindung betrifft eine Platinenzuführeinrichtung für eine Presse, insbesondere Transferpresse, zum automatischen Zuführen von Platinen aus magnetischen und/oder nichtmagnetischen Werkstoffen von den Entstapelstationen in die Aufnahmestation einer Presse ohne Unterbrechung des Arbeitsablaufs beim Zuführen eines neuen Platinenstapels gemäß dem Oberbegriff des Patentanspruchs 1.

Es ist bereits eine Vorrichtung zum Entstapeln und Transportieren von Platinen in den Arbeitsraum einer Presse bekannt (DE-PS 25 34 819), bei der in Förderrichtung hintereinander mindestens zwei Platinenstapel auf verfahrbaren Hubwagen gelagert sind, von denen die Platinen mittels Hubeinrichtungen, insbesondere Saugerbrücken, abgehoben und an magnetisch wirkende Hängeförderer übergeben werden. Die Hängeförderer sind mit separaten Antrieben versehen und führen die Platinen über eine Doppelplatinenkontrolleinrichtung einer Zentrierstation zu. Eine in Abhängigkeit von der nachfolgenden Presse steuerbare Klinkenvorschubeinrichtung transportiert die Platinen über eine oder mehrere Zwischenstufen in den Arbeitsraum der Presse. Durch die Anordnung von zwei Platinenstapeln im Abhebebereich der Zuführeinrichtung ist es möglich, bereits während der Abarbeitung des einen Platinenstapels einen neuen auf dem zweiten Stapelplatz bereitzustellen, so daß ein ununterbrochener Arbeitsablauf der Presse erreichbar ist. Nachteilig wirkt sich bei dieser Lösung der große Platzbedarf in Transportrichtung aus. Die Lösung ist für den Transport von Platinen aus nichtmagnetischen Werkstoffen nicht anwendbar.

Bei einer anderen bekannten Einrichtung der vorstehend genannten Art (DE-OS 28 00 381) ist ein mit Greiferelementen versehener Transportschlitten in horizontaler Richtung verschiebbar auf einer Führungsschiene gelagert. Der Antrieb der Greiferelemente erfolgt einer vorwählbaren Bahnkurve folgend durch zumindest zwei numerisch gesteuerte Stellantriebe in zwei senkrecht zueinander stehenden Ebenen.

Die Platinen werden durch die Greiferelemente von einem Vorratsstapel abgenommen, über eine Doppelplatinenkontrolle und ggf. eine Einfettstation transportiert und ohne Zwischenlagerung direkt dem Werkzeugraum der Presse positioniert zugeführt. Durch Umschalten der Stellantriebe ist das wahlweise Abarbeiten von mehreren in Transportrichtung hintereinander angeordneten Platinenstapeln und damit ein ununterbrochener Arbeitsablauf der Presse möglich. Ein Mangel dieser Lösung ist darin zu sehen, daß auf Grund der langen Transportwege, insbesondere beim Abarbeiten des von der Presse weiter entfernten Platinenstapels und der bei Zuführeinrichtungen mit separaten Antrieben erforderlichen Sicherheitsabstände zwischen den Greiferelementen und dem Pressenwerkzeug in den kollisionsgefährdeten Phasen während des Abwärtshubes des Pressenstößels die erreichbaren max. Hubzahlen der Presse niedriger sind.

Eine weitere bekannte Einrichtung (DD-PS 258 123) enthält zum Antrieb des Transportschlittens ein mit dem Pressenantrieb verbundenes Kurvengetriebe mit umschaltbaren Förderweg.
Die Abnahme der Platinen erfolgt durch Sauger, die mittels pneumatischer Arbeitszylinder heb- und senkbar am Schlitten angeordnet sind. Ein Mangel dieser Lösung besteht ebenfalls in der durch die langen Transportwege bedingten geringeren Produktivität.

Bei einer anderen Einrichtung zum lückenlosen Zuführen von Blechstreifen (DE-PS 21 31 238) sind mehrere Stapel auf Stapelwagen beiderseits neben einer in Transportrichtung der Presse angeordneten Rollenbahn vorgesehen. Oberhalb der Rollenbahn ist ein mit heb- und senkbaren Saugerspinnen versehener Schlitten quer zur Transportrichtung der Presse verschiebbar gelagert.
Die Blechstreifen werden mittels der Saugerspinnen vom Stapel abgehoben, durch den Querförderer zur Rollenbahn transportiert und von hier mittels mehrerer Vorschubwalzenpaare der Presse zugeführt. Diese Einrichtung ist auf Grund der Charakteristik und der begrenzten Vorschubgeschwindigkeit des Walzenvorschubs für das Ablegen großflächiger Platinen in der Zentrier- bzw. Aufnahmestation einer Presse nicht geeignet.

Der Erfindung liegt das Problem zugrunde, eine Platinenzuführeinrichtung nach dem Oberbegriff des Patentanspruchs 1 so zu gestalten, daß bei geringem Platzbedarf in Transportrichtung eine kurze Taktfolge und damit eine hohe Produktivität ermöglicht wird. Gleichzeitig sollen eine Verkürzung der Rüstzeiten beim Werkzeugwechsel sowie bei Bedarf ein beiderseitiges Schmieren der Platinen ohne zusätzliche Schmierstation während der Schlittenbewegung realisierbar sein.

Erfindungsgemäß wird das durch die im kennzeichnenden Teil des Patentanspruchs 1 beschriebenen Merkmale erreicht. Weitere detaillierte Ausgestaltungen der Erfindung sind in den Ansprüchen 2 bis 11 beschrieben.
Die Ansprüche 2 bis 5 betreffen dabei verschiedene Ausführungen des Antriebes der Schlitten in der Transportrichtung und der Anspruch 6 die Ausgestaltung des Antriebes für die Hubbewegung der Saugerspinnen.

In den Ansprüchen 7 bis 9 sind mehrere Varianten für das Umrüsten der Zuführeinrichtung auf ein anderes Blechteil beschrieben. Ein besonderer Vorteil der Verstellbarkeit der Saugerspinnen gemäß Anspruch 7 besteht neben der Verkürzung der Rüstzeiten in der Einsparung der Kosten für eine Vielzahl von teilespezifischen Saugerspinnen und deren Lagerung.
Die Ansprüche 10 und 11 zeigen vorteilhafte Ausgestaltungen zum Schmieren der Platinen während der Schlittenbewegung.

Die Erfindung wird nachstehend an Ausführungsbeispielen näher erläutert. Die zugehörigen Zeichnungen zeigen:
- Fig. 1:: eine schematische Darstellung einer Platinenzuführeinrichtung mit gegenläufig verfahrbaren Schlitten und mittiger Übergabeposition in der Vorderansicht,
- Fig. 2:: die Einrichtung nach Fig. 1 in der Draufsicht.

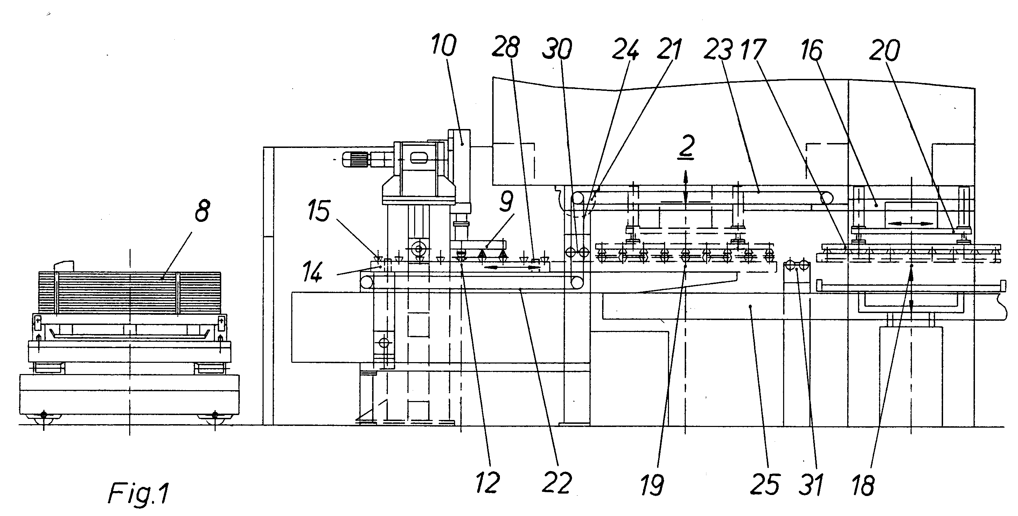

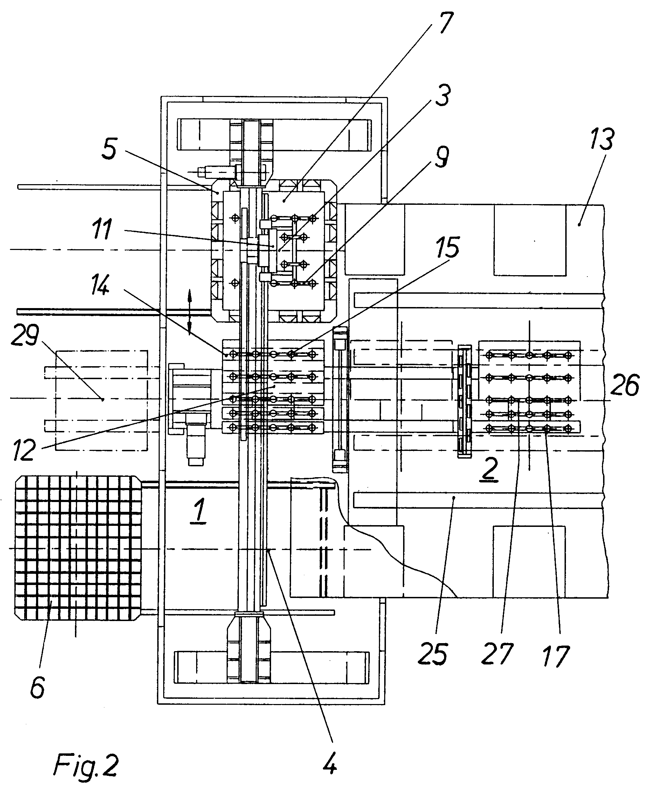

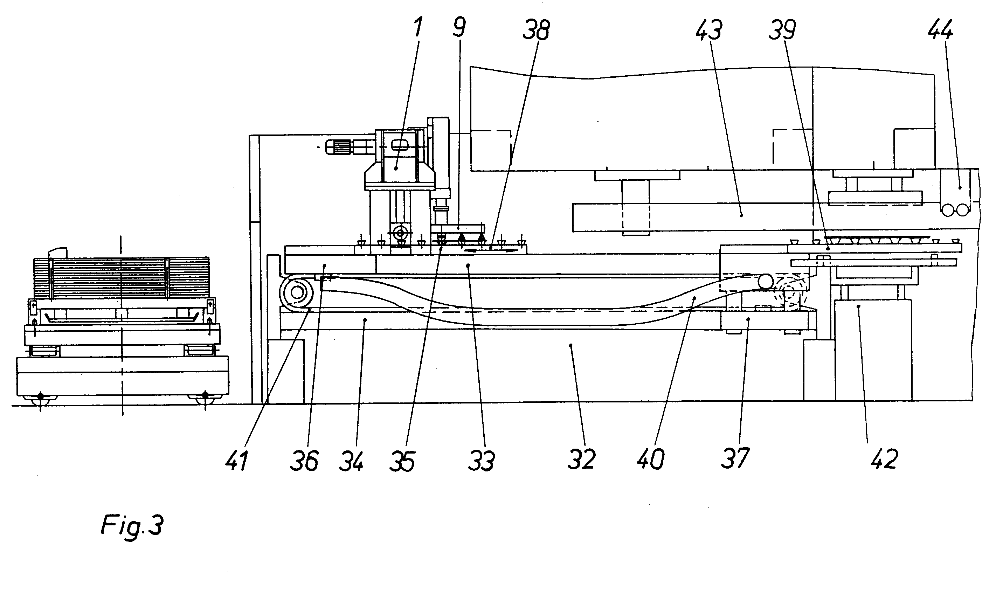

Die Platinenzuführeinrichtung (Fig. 1 und 2) besteht aus einer Kombination von einer Querfördereinrichtung 1 und einer Längsfördereinrichtung 2.
Die Querfördereinrichtung 1 enthält rechts und links neben der Werkstücktransportebene je eine Entstapelstation 3, 4, denen jeweils mindestens ein auf Schienen ausfahrbarer Stapelwagen 5, 6 zugeordnet ist. Durch unterhalb der Stapelwagen 5, 6 angeordnete, nicht näher dargestellte hydraulische Arbeitszylinder wird der jeweils abzuarbeitende Platinenstapel 7, 8 kontinuierlich angehoben, damit die obere Platine in den Wirkbereich der Saugerspinne 9 der Querfördereinrichtung 1 kommt. Die Saugerspinne 9 ist an einer vertikal bewegbaren Hubeinheit 10 angeordnet, die mit einem horizontal bewegbaren Schlitten 11 wirkverbunden ist, wodurch eine zweidimensionale Bewegung der Platinen von der Entstapelstation 3 zur Aufnahmeposition 12 der Längsfördereinrichtung 2 möglich ist. Nach dem Transport der letzten Platine des Stapelwagens 5 fährt der Schlitten 11 zur Entstapelstation 4, während der Stapelwagen 5 aus dem Bereich der Querfördereinrichtung 1 zum Beladen eines neuen Platinenstapels 7 ausfährt, so daß ohne Unterbrechung des Arbeitsablaufs der Presse 13 eine kontinuierliche Platinenzuführung möglich ist. Die Platinen gelangen von der Entstapelstation 4 auf analoge Weise zur Aufnahmeposition 12 der Längsfördereinrichtung 2.
Die Längsfördereinrichtung 2 enthält einen horizontal in Transportrichtung der Presse 13 bewegbaren ersten Schlitten 14, der mit einer nach oben gerichteten Saugerspinne 15 zur Übernahme der Platine von der Saugerspinne 9 der Querfördereinrichtung 1 in der Aufnahmeposition 12 wirkverbunden ist.
Der Längsfördereinrichtung 2 ist ein zweiter Schlitten 16 mit einer nach unten gerichteten Saugerspinne 17 zugeordnet.
Während sich der erste Schlitten 14 in der Aufnahmeposition 12 befindet, steht der zweite Schlitten 16 über der Ablageposition 18 zu einer Transfereinrichtung positioniert.

Die beiden Schlitten 14, 16 sind gegenläufig in zwei Ebenen synchrongesteuert verfahrbar. In ihrer zweiten Endlage stehen sie deckungsgleich in einer gemeinsamen Übergabeposition 19 übereinander, die sich mittig zwischen der Aufnahmeposition 12 und der Ablageposition 18 befindet.
Die Saugerspinne 17 des zweiten Schlittens 16 übernimmt, durch eine vertikal bewegbare Hubeinheit 20 betätigt, die Platine von der Saugerspinne 15 des ersten Schlittens 14.

Während des Rücklaufes des ersten Schlittens 14 zur Aufnahmepostion 12 bewegt sich der zweite Schlitten 16 mit der Platine in die Ablageposition 18.
Die gegenläufige Bewegung der beiden Schlitten 14, 16 erfolgt vorzugsweise über einen gemeinsamen Antrieb 21, wobei die beiden, den Schlitten 14, 16 zugeordneten horizontalen Zahnriementriebe 22, 23, durch einen vertikalen Zahnriementrieb 24 wirkverbunden sind.
Die Schlittenbewegung erfolgt synchrongesteuert zur Transfereinrichtung der Presse 13.
In einer anderen Ausgestaltungsform ist ein mechanisch synchrongesteuerter Antrieb vom nicht dargestellten Kurvenfolgehebel des Kurvenkoppelgetriebes der Transfereinrichtung vorgesehen.
In der Ablageposition 18 wird die Platine in bekannter Weise an die Zentrierstation der Transfereinrichtung übergeben. Nach nochmaliger Doppelteilkontrolle und Lagezentrierung wird die Platine durch die an den Tragschienen 25 befestigten Greiferelemente bei synchronem Tragschienenhebehub und Vertikalhub der Zentrierstation in die erste Werkzeugstufe 26 der Presse 13 transportiert.
In einer ersten vorteilhaften Ausgestaltung können die Saugerspinnen 15, 17 universell auf eine andere Platinengröße und Platinenform eingestellt werden. Dazu sind die einzelnen Saugerarme 27 der Saugerspinnen 15, 17 breitenverstellbar ausgeführt. Die jeweils nicht benötigten Sauger befinden sich in einer zurückgezogenen Stellung und werden nicht angesteuert.

Bei einer weiteren Ausführung sind platinenspezifische Saugerspinnen 9, 15, 17 vorgesehen, die beim Umrüsten auf eine andere Platinengröße und/oder Platinenform ausgetauscht werden. Dazu sind die Saugerspinnen 9, 15, 17 mit Schnellwechselkupplungen an den Schlitten 11, 14, 16 befestigt.

In der für den ersten und zweiten Schlitten 14, 16 gemeinsamen Übergabeposition 19 wird die zu wechselnde Saugerspinne 17 durch Lösen der Schnellwechselkupplungen in den Aufnahme- und Arretierelementen 28 des ersten Schlitten 14 positioniert abgelegt. Der Schlitten 14 fährt anschließend in die Aufnahmeposition 12 zurück. In dieser Position kann das Saugerspinnenpaar 15, 17 einschließlich der Saugerspinne 9 der Querfördereinrichtung 1 gewechselt werden. Es ist weiterhin möglich, daß der erste Schlitten 14 in eine vor der Aufnahmeposition 12 der Längsfördereinrichtung 2 befindliche Saugerspinnenwechselstation 29 mit verlängertem Transporthub fährt und die Saugerspinnen 9, 15, 17 außerhalb des Schutzraumes der Platinenzuführeinrichtung gewechselt werden.

Zur Schmierung der Platinenober- und/oder Platinenunterseite sind in die Längsfördereinrichtung 2 Beöleinrichtungen 30, 31 mit Walzen- bzw. Sprühtechnik integriert. Die Beöleinrichtung 30 für die Platinenoberseite befindet sich zwischen der Aufnahmeposition 12 und der Übergabeposition 19 oberhalb der Transportebene. Die Platinenunterseite wird durch die unterhalb der Transportebene zwischen der übergabeposition 19 und der Ablageposition 18 befindliche Beöleinrichtung 31 geschmiert.

In einer abgeleiteten Ausgestaltung des ersten Ausführungsbeispiels ist es auch möglich, daß der Schlitten 16 zwei Saugerspinnen im halben Abstand zwischen der Aufnahmeposition 12 und der Ablageposition 18 der Längsfördereinrichtung 2 enthält. Eine in der Übergabeposition 19 befindliche stationäre Platinenaufnahmeeinrichtung mit integrierter Hubstation übernimmt die Platine von der ersten Saugerspinne des Schlittens 16 und übergibt diese nach erfolgtem Schlittenrückhub an die zweite Saugerspinne des Schlittens 16.

Die Lösung ist allerdings gegenüber der erstgenannten mit einem etwas höheren Aufwand verbunden - der in Längsrichtung angeordnete Doppelfeeder erfordert einschließlich der stationären Hubeinrichtung drei Saugerspinnenstationen, wodurch sich eine mehrmalige Übernahme/Übergabe der Platinen bis zur Ablageposition 18 ergibt.

## Patentansprüche

1. Platinenzuführeinrichtung für eine Presse (13), insbesondere Transferpresse, zum automatischen Zuführen von Platinen aus magnetischen und/oder nichtmagnetischen Werkstoffen von den Entstapelstationen (3, 4) in die Aufnahmestation (12) der Presse ohne Unterbrechung des Arbeitsablaufs beim Zuführen eines neuen Platinenstapels (7, 8), mit einer Querfördereinrichtung (1) mit einem quer zur Transportrichtung der Presse verfahrbaren Schlitten (11) mit heb- und senkbar gelagerten Saugerspinnen (9), mit einer Längsfördereinrichtung (2) zum Transport der Platinen in Transportrichtung in eine Aufnahmestation und mit mindestens zwei seitlich neben der Zuführebene auf Stapelwagen (5, 6) angeordneten Platinenstapeln, die wechselseitig nacheinander abgearbeitet werden, dadurch gekennzeichnet, daß die Längsfördereinrichtung (2) zwei gegenläufig verfahrbare Schlitten (14, 16) enthält, von denen der erste, von der Presse (13) weiter entfernte Schlitten (14) mit nach oben gerichteten Saugerspinnen (15) versehen und unterhalb der Transportebene gelagert ist und der zweite Schlitten (16) mit in bekannter Weise nach unten gerichteten Saugerspinnen (17) versehen und oberhalb der Transportebene gelagert ist und die beiden Schlitten (14, 16) sich in einer - vorzugsweise auf dem halben Transportweg zwischen der Aufnahmeposition (12) und der Ablageposition (18) zu einer Transfereinrichtung vorgesehenen - gemeinsamen Übergabeposition (19) überdecken.

2. Platinenzuführeinrchtung nach Anspruch 1, dadurch gekennzeichnet, daß die beiden Schlitten (14, 16, 36, 37) mittels Ketten- oder Zahnriementrieben (22, 23, 24, 41) miteinander gekoppelt sowie über Zahnrad- und/oder Koppelgetriebe mit dem Kurvenfolgehebel eines vom Pressenantrieb angetriebenen Kurvengetriebes verbunden sind.

3. Platinenzuführeinrichtung nach Anspruch 1, dadurch gekennzeichnet, daß ein gemeinsames Kurvengetriebe für den Antrieb der Transfereinrichtung (43) und der Platinenzuführeinrichtung vorgesehen ist, dessen Kurvenfolgehebel mittels Koppelgetrieben mit den Greiferschienen der Transfereinrichtung (43) und mit den Schlitten (14, 16, 36, 37) der Platinenzuführeinrichtung wirkverbunden sind.

4. Platinenzuführeinrichtung nach Anspruch 1, dadurch gekennzeichnet, daß die beiden Schlitten (14, 16, 36, 37) mittels Ketten- oder Zahnriementrieben (22, 23, 24, 41) mit einem synchron zur Stößelbewegung der Presse steuerbaren Antriebsmotor verbunden sind.

5. Platinenzuführeinrichtung nach Anspruch 1, dadurch gekennzeichnet, daß jedem Schlitten (14, 16, 36, 37) ein synchron zur Stößelbewegung steuerbarer Antriebsmotor zugeordnet ist.

6. Platinenzuführeinrichtung nach Anspruch 1, dadurch gekennzeichnet, daß als Antrieb für die Hubbewegung der Saugerspinnen (9, 17) des bzw. der oberen Schlitten (11, 16) Servoantriebe oder frequenzgesteuerte Synchronmotore an diesen angeordnet sind, die über Gewindespindeln mit den Saugerspinnen (9, 17) verbunden sind.

7. Platinenzuführeinrichtung nach Anspruch 1, dadurch gekennzeichnet, daß die Saugerspinnen (9, 15, 17, 38, 39) quer zur Transportrichtung entsprechend der Größe der Platinen einstellbar sind und/oder die Sauger als Hubsauger ausgeführt sind, von denen die beim Transport von kleineren Platinen jeweils nicht benutzten Sauger sich in einer zurückgezogenen Position befinden und keine Saugfunktion ausführen.

8. Platinenzuführeinrichtung nach Anspruch 1, dadurch gekennzeichnet, daß auf den Stapelwagen (5, 6) Aufnahmeelemente für die Saugerspinnen (9, 15, 17, 38, 39) angeordnet sind und die Saugerspinnen (9, 15, 17, 38, 39) beim Umrüsten schrittweise mittels schaltbarer Kupplungen von den Schlitten (11, 14, 16, 36, 37) abgekoppelt und in den Aufnahmeelementen der Stapelwagen (5, 6) in mehreren Etagen übereinander abgelegt sind.

9. Platinenzuführeinrichtung nach Anspruch 1, dadurch gekennzeichnet, daß in Transportrichtung gesehen vor der Aufnahmeposition (12, 35) der Längsfördereinrichtung (2, 32) eine Saugerspinnenwechselstation (29) vorgesehen ist und der untere Schlitten (14) bzw. die Schlitten (36, 37) mit Aufnahmeelementen für die Saugerspinnen des bzw. der oberen Schlitten (11, 16) versehen und beim Umrüsten mit den mittels schaltbarer Kupplungen von den oberen Schlitten (11, 16) abgekoppelten Saugerspinnen (9, 17) entgegen der Transportrichtung über die Aufnahmeposition (12, 35) hinaus ausfahrbar sind.

10. Platinenzuführeinrichtung nach Anspruch 1, dadurch gekennzeichnet, daß zur Schmierung der Platinen auf der Oberseite eine Beöleinrichtung (30) oberhalb der Transportebene im Fahrbereich des unteren Schlittens (14) angeordnet ist, unter der die Platinen auf der Saugerspinne (15) liegend beim Schlittenvorlauf hindurchgeführt werden.

11. Platinenzuführeinrichtung nach Anspruch 1, dadurch gekennzeichnet, daß zur Schmierung der Platinen auf der Unterseite eine Beöleinrichtung (31) unterhalb der Transportebene im Fahrbereich des zweiten Schlittens (16) angeordnet ist, über die die Platinen an der Saugerspinne (17) hängend beim Schlittenvorlauf geführt werden.

## Claims

1. A sheet bar supply device for a press (13), more particularly a transfer press, for the automatic supply of sheet bars made of magnetic and/or non-magnetic materials from the destacking stations (3, 4) in the receiving station (12) of the press without interrupting the work sequence during the supply of a new sheet bar stack (7, 8), with a cross conveyor (1) with a carriage (14) transversely displaceable relative to the transportation direction with suction spiders (9), which are mounted so as to be raisable and lowerable, with a longitudinal conveyor (2) for transporting the sheet bars in the transportation direction into a receiving station and with at least two sheet bar stacks, which are arranged laterally adjacent the supply plane on stack trolleys (5, 6) and which are worked off alternately, characterised in that the longitudinal conveyor (2) comprises two carriages (14, 16), which are displaceable in opposite directions, the first carriage (14) further from the press (13) being provided with upwardly directed suction spiders (15) and being mounted below the transportation plane and the second carriage (16) being provided in known manner with downwardly directed suction spiders (17) and being mounted above the transportation plane, and the two carriages (14, 16) overlapping in a common transfer position (19) preferably provided half way along the transportation path between the receiving position (12) and the depositing position (18) onto a transfer device.

2. A sheet bar supply device according to claim 1, characterised in that the two carriages (14, 16, 36, 37) are coupled to one another by means of chain or toothed belt drives (22, 23, 24, 41) and are connected via a train of toothed gears or and/or a coupling gearing to the cam follow-up lever of a cam gearing driven by the press drive.

3. A sheet bar supply device according to claim 1, characterised in that a common cam drive is provided for the drive of the transfer device (43) and the sheet bar supply device, the cam follow-up lever of said drive being actively connected by means of coupling gearings to the gripper rails of the transfer device (43) and the carriages (14, 16, 36, 37) of the sheet bar supply device.

4. A sheet bar supply device according to claim 1, characterised in that the two carriages (14, 16, 36, 37) are connected by means of chain or toothed belt drives (22, 23, 24, 41) to a drive motor which can be controlled synchronously with the ram movement of the press.

5. A sheet bar supply device according to claim 1, characterised in that a drive motor which can be controlled synchronously with the ram movement is associated with each carriage (14, 16, 36, 37).

6. A sheet bar supply device according to claim 1, characterised in that, as a drive for the lifting movement of the suction spiders (9, 17) of the upper carriage or carriages (11, 16), servo drives or frequency-controlled synchronous motors are arranged on said carriage or carriages and are connected with the suction spiders (9, 17) via threaded spindles.

7. A sheet bar supply device according to claim 1, characterised in that the suction spiders (9, 15, 17, 38, 39) are adjustable transversely to the transportation direction as a function of the size of the sheet bars and/or the suckers are constructed as lifting suckers, the suckers not utilised during the transportation of smaller sheet bars lying in a retracted position and not effecting any suction function.

8. A sheet bar supply device according to claim 1, characterised in that receiving elements for the suction spiders (9, 15, 17, 38, 39) are arranged on the stack trolleys (5, 6) and the suction spiders (9, 15, 17, 38, 39) are decoupled from the carriages (11, 14, 16, 36, 37) in step fashion during change-over by means of switchable couplings and are deposited in a plurality of superimposed layers in the receiving elements of the stack trolleys (5, 6).

9. A sheet bar supply device according to claim 1, characterised in that a suction spider change-over station (29) is provided upstream of the receiving position (12, 35) of the longitudinal conveyor (2, 32) viewed in the transportation direction, and the lower carriage (14) or the carriages (36, 37) are provided with receiving elements for the suction spiders of the upper carriage or carriages (11, 16) and during change-over can be displaced beyond the receiving position (12, 35) in the opposite direction to the transportation direction with the suction spiders (9, 17) decoupled from the upper carriages (11, 16) by means of the switchable couplings.

10. A sheet bar supply device according to claim 1, characterised in that, for lubricating the sheet bars on the upper side, an oiling device (30) is arranged above the transportation plane in the displacement region of the lower carriage (14), beneath which oiling device the sheet bars, resting on the suction spider (15), are guided during the carriage advance.

11. A sheet bar supply device according to claim 1, characterised in that, for lubricating the sheet bars on the lower side, an oiling device (31) is arranged beneath the transportation plane in the displacement region of the second carriage (16), above which oiling device the sheet bars, suspended from the suction spider (17), are guided during the carriage advance.

## Revendications

1. Dispositif d'alimentation en platines pour une presse (13), en particulier pour une presse de transfert, pour l'alimentation automatique en platines à base de matériaux magnétiques et/ou non magnétiques, depuis les postes de prélèvement de piles (3,4) vers le poste de réception (12) de la presse sans interruption du cycle de travail lors de l'arrivée d'une nouvelle pile de platines (7,8), équipé d'un transporteur transversal (1) pourvu d'une glissière (11) déplaçable transversalement au sens de transport de la presse avec des araignées aspirantes (9) pouvant être levées et abaissées, d'un transporteur longitudinal (2) pour le transport des platines dans le sens de transport vers un poste de réception et avec au moins deux piles de platines disposées latéralement à côté du niveau d'alimentation sur des chariots d'empilage (5,6), qui sont traitées alternativement et de façon successive, caractérisé en ce que le transporteur longitudinal (2) contient deux glissières (14, 16) déplaçables dans le sens contraire, dont la première (14) un peu plus éloignée de la presse (13) est pourvue d'araignées aspirantes (15) dirigées vers le haut et est logée au-dessous du niveau de transport et la deuxième glissière (16) est pourvue d'araignées aspirantes (17) dirigées vers le bas de façon connue et est logée au-dessus du niveau de transport et les deux glissières (14, 16) se chevauchent dans une position de remise (19) commune - prévue de préférence à mi-parcours entre la position de réception (12) et la position de dépose (18) pour un dispositif de transfert.

2. Dispositif d'alimentation en platines selon la revendication 1, caractérisé en ce que les deux glissières (14, 16, 36, 37) sont couplées entre elles au moyen de transmissions par courroie à chaîne ou courroie dentée (22, 23, 24, 41) et sont reliées par engrenage et/ou mécanisme articulé au levier séquentiel à came d'un mécanisme à came entraîné par une commande de presse.

3. Dispositif d'alimentation en platines selon la revendication 1, caractérisé en ce qu'un mécanisme à came commun est prévu pour l'entraînement du dispositif de transfert (43) et du dispositif d'alimentation en platines, dont les leviers séquentiels à came sont reliés de façon active au moyen de mécanismes articulés aux rails de préhension du dispositif de transfert (43) et aux glissières (14, 16, 36, 37) du dispositif d'alimentation en platines.

4. Dispositif d'alimentation en platines selon la revendication 1, caractérisé en ce que les deux glissières (14, 16, 36, 37) sont reliées au moyen de transmissions par courroie à chaîne ou courroie dentée (22, 23, 24, 41) à un moteur d'entraînement pouvant être commandé de façon synchrone avec le mouvement du poussoir de la presse.

5. Dispositif d'alimentation en platines selon la revendication 1, caractérisé en ce qu'à chaque glissière (14, 16, 36, 37) est attribué un moteur d'entraînement pouvant être commandé de façon synchrone avec le mouvement du poussoir.

6. Dispositif d'alimentation en platines selon la revendication 1, caractérisé en ce que, en guise de commande pour le mouvement de levage des araignées aspirantes (9, 17) de la ou des glissières (11, 16) supérieures, on dispose sur celles-ci des servocommandes ou des moteurs synchrones commandés par fréquence qui sont reliés par des broches filetées aux araignées aspirantes (9, 17).

7. Dispositif d'alimentation en platines selon la revendication 1, caractérisé en ce que les araignées aspirantes (9, 15, 17, 38, 39) peuvent être réglées transversalement au sens de transport en fonction de la grandeur des platines et/ou les têtes aspirantes sont conçues comme des aspirateurs de levage, parmi lesquels les têtes aspirantes non utilisées lors du transport de platines plus petites se trouvent dans une position reculée et n'exécutent pas une fonction d'aspiration.

8. Dispositif d'alimentation en platines selon la revendication 1, caractérisé en ce que des éléments récepteurs pour les araignées aspirantes (9, 15, 17, 38) sont disposés sur les chariots d'empilage (5, 6) et les araignées aspirantes (9, 15, 17, 38, 39) sont désaccouplées des glissières (11, 14, 16, 36, 37) lors du changement d'équipement progressivement au moyen de dispositifs d'accouplement embrayables et sont déposés les uns sur les autres dans les éléments récepteurs des chariots d'empilage (5, 6) sur plusieurs étages.

9. Dispositif d'alimentation en platines selon la revendication 1, caractérisé en ce qu'un poste de changement d'araignée aspirante (29) est prévu avant la position de réception (12, 35) du transporteur longitudinal, vue dans le sens de transport, et la glissière (14) inférieure et les glissières (36, 37) sont pourvues d'éléments récepteurs pour les araignées aspirantes de la ou des glissières (11, 16) supérieures et peuvent être déployées au-delà de la position de réception (12, 35) dans le sens contraire au sens de transport lors du changement d'équipement avec les araignées aspirantes (9, 17) désaccouplées des glissières (11, 16) supérieures au moyen de dispositifs d'accouplement embrayables.

10. Dispositif d'alimentation en platines selon la revendication 1, caractérisé en ce que, pour la lubrification des platines sur la face supérieure, un dispositif d'huilage (30) est disposé au-dessus du niveau de transport dans la zone de déplacement de la glissière inférieure (14), niveau au dessous duquel les platines sont passées allongées sur l'araignée aspirante (15) lors de l'avancée de la glissière.

11. Dispositif d'alimentation en platines selon la revendication 1, caractérisé en ce que, pour la lubrification des platines sur la face inférieure, un dispositif d'huilage (31) est disposé au-dessous du niveau de transport dans la zone de déplacement de la deuxième glissière (16), niveau au-dessus duquel les platines sont guidées accrochées sur l'araignée aspirante (17) lors de l'avancée de la glissière.
